# EUROPÄISCHE PATENTANMELDUNG

(11) **EP 1 750 485 A1**
(43) Veröffentlichungstag der Anmeldung: **07.02.2007**
(21) Anmeldenummer: 06015798.9
(22) Anmeldetag: 28.07.2006
(51) Int. Cl.: H05B 6/14, H05B 6/40, B23P 11/02, B23B 31/02

(54) **Vorrichtung und Verfahren zum induktiven Erwärmen von Werkzeugaufnahmen**

(30) Priorität: 05.08.2005 DE 202005012523 U
(71) Anmelder: RS elektronik GmbH, 86316 Friedberg (DE)
(72) Erfinder: Feller, Bernhard, 86316 Friedberg (DE); Klett, Andreas, Dr., 86438 Kissing (DE); Wolf, Arne, Dr., 86438 Kissing (DE)
(74) Vertreter: Ernicke, Klaus Stefan

(57) **Zusammenfassung**

Die Erfindung betrifft eine Vorrichtung und ein Verfahren zum induktiven Erwärmen von Werkzeugaufnahmen (2). Die Erwärmungsvorrichtung (1) besteht aus einem Träger mit mindestens einer induktiven Spulenanordnung (4,5,6), die mehrere radial ineinander und/oder axial hintereinander angeordnete und getrennt steuerbare Spulen (7,8,9,17) oder Spulenabschnitte (19) aufweist, die ein über die Längsachse (32) veränderliches elektromagnetisches Feld erzeugen. Die Spulenanordnung (4,5,6) weist radial außenseitig mindestens eine Hauptspule (7) zur Erzeugung eines Hauptfelds und innenseitig ein oder zwei Kompensationsspulen (8) oder Verstärkerspulen (9) zur Erzeugung eines lokalen, entgegengerichteten Kompensationsfelds oder zweier lokaler, gleichgerichteter Verstärkungsfelder.

## Beschreibung

Die Erfindung betrifft eine Vorrichtung und ein Verfahren zum induktiven Erwärmen von Gegenständen, insbesondere Werkzeugaufnahmen mit den Merkmalen im Oberbegriff des Verfahrens- und Vorrichtungshauptanspruchs.

Eine solche Vorrichtung ist aus der DE 101 57 432 A1 bekannt. Sie ist als sogenanntes Schrumpfgerät ausgebildet, mit dem Werkzeuge, insbesondere rotierende Werkzeuge, in einer Werkzeugaufnahme mit Schrumpfsitz befestigt werden können. Das Schrumpfgerät besteht aus einem Träger mit einer induktiven Spulenanordnung, welche eine einzelne Spule mit einer in Axialrichtung veränderten Wicklungsgeometrie oder örtlich getrennten Spulenbereichen beinhaltet. Die Spule ist an eine Energieversorgung, einen sogenannten Generator, angeschlossen und ermöglicht die Erzeugung eines über die Längsachse veränderlichen elektromagnetischen Feldes. Hierbei kann insbesondere das elektromagnetische Feld im mittleren Bereich der Werkzeugaufnahme geschwächt werden. Die Werkzeugaufnahme erwärmt sich nämlich örtlich unterschiedlich stark, was zu entsprechend unterschiedlichen Aufweitungen der hülsenförmigen Werkzeugaufnahme führt, was wiederum Klemmprobleme beim Einsetzen und insbesondere beim Entfernen des Werkzeugs aufwirft. Das lokal veränderliche elektromagnetische Feld sorgt für eine Vergleichmäßigung der Erwärmung der Werkzeugaufnahme. Die vorbekannte Vorrichtung hat nur eine beschränkte Flexibilität hinsichtlich Art und Größe der Werkzeugaufnahmen sowie Steuerung des Dehn- und Schrumpfverhaltens. Außerdem besitzt der Träger für die Spulenanordnung ein Gehäuse, dessen Wandung durchgehend aus einem magnetisch leitenden, dabei aber elektrisch isolierenden Material besteht.

Insbesondere die Stirnwände des im wesentlichen zylindrischen Gehäuses bestehen aus diesem Material. Diese Gehäusegestaltung dient der Vermeidung von magnetischen Streuverlusten. Die DE 199 15 412 A1 zeigt eine ähnliche Gehäusegestaltung.

Es ist Aufgabe der vorliegenden Erfindung, eine verbesserte Technik zum induktiven Erwärmen von Gegenständen, insbesondere Werkzeugaufnahmen aufzuzeigen.

Die Erfindung löst diese Aufgabe mit den Merkmalen im Verfahrens- und Vorrichtungshauptanspruch.
Die beanspruchte Mehrfachanordnung von radial ineinander angeordneten Spulen hat den Vorteil, dass sich das auf den Werkzeughalter oder dgl. einwirkende resultierende elektromagnetische Feld besonders gut beeinflussen und steuern lässt. Insbesondere sind die Einflussmöglichkeiten größer als beim Stand der Technik. Die Steuerung kann auch auf unterschiedliche Werkzeugaufnahmen individuell angepasst werden.

Die kombinierte Spulenanordnung lässt sich auf unterschiedliche Weise realisieren. Das von mindestens einer Hauptspule erzeugte Hauptfeld kann durch eine Kompensationsspule mit einem entgegen gerichteten Kompensationsfeld lokal geschwächt werden. Andererseits ist eine lokale Feldverstärkung der Hauptspule durch mehrere Verstärkungsspulen mit gleich gerichteten Verstärkungsfeldern möglich. Die verschiedenen Felder können individuell eingestellt und gesteuert werden. Hierdurch ergeben sich hochflexible Einfluss- und Anpassungsmöglichkeiten für das aus der Feldüberlagerung resultierende Feld, welches auf die Werkzeugaufnahme einwirkt. Hierbei lässt sich insbesondere die beim Stand der Technik angestrebte gleichmäßige Erwärmung mit höherer Präzision erreichen. Alternativ sind durch die vielfältigen Steuerungsmöglichkeiten auch gezielte lokale Temperatur- und Erwärmungsunterschiede einstellbar.

Die Anordnung einer magnetisch und elektrisch leitenden Stirnwand am Gehäuse des Trägers hat den Vorteil, dass hierfür einfachere und kostengünstigere Materialien eingesetzt werden können. Ferner ist es möglich, die über die elektrische Leitfähigkeit entstehende Erwärmung der Stirnwand als Zusatzbeheizung für die Werkzeugaufnahme zu verwenden.

Die Flexibilität der beanspruchten induktiven Erwärmungsvorrichtung bzw. des Schrumpfgeräts kann noch weiter gesteigert werden durch eine Kombispule, die in ihrer Größe und insbesondere in ihrem Durchmesser durch bewegliche Wicklungssegmente verändert und damit optimal an unterschiedliche Werkzeugaufnahmen angepasst werden kann. Ferner ist es möglich, an einem Träger mehrere unterschiedliche Spulenanordnungen unterzubringen und dadurch mit einem Schrumpfgerät eine Reihe unterschiedlicher Werkzeugaufnahmen optimiert erwärmen zu können.

In den Unteransprüchen sind weitere vorteilhafte Ausgestaltungen der Erfindung angegeben.

Die Erfindung ist in den Zeichnungen beispielweise und schematisch dargestellt. Im einzelnen zeigen:
- Figur 1 und 2:: eine mehrteilige Spulenanordnung in einem induktiven Schrumpfgerät mit einem schematischen Diagramm der resultierenden Feldstärke,
- Figur 3 und 4:: eine Variante zu der Anordnung von Figur 1 und 2,
- Figur 5 bis 8:: weitere Varianten zu Figur 1 bis 4 Schaltungsbeispiele für in Reihe geschaltete Spulen,
- Figur 9:: einen Querschnitt durch einen Träger mit einer Spulenanordnung und einem Gehäuse,

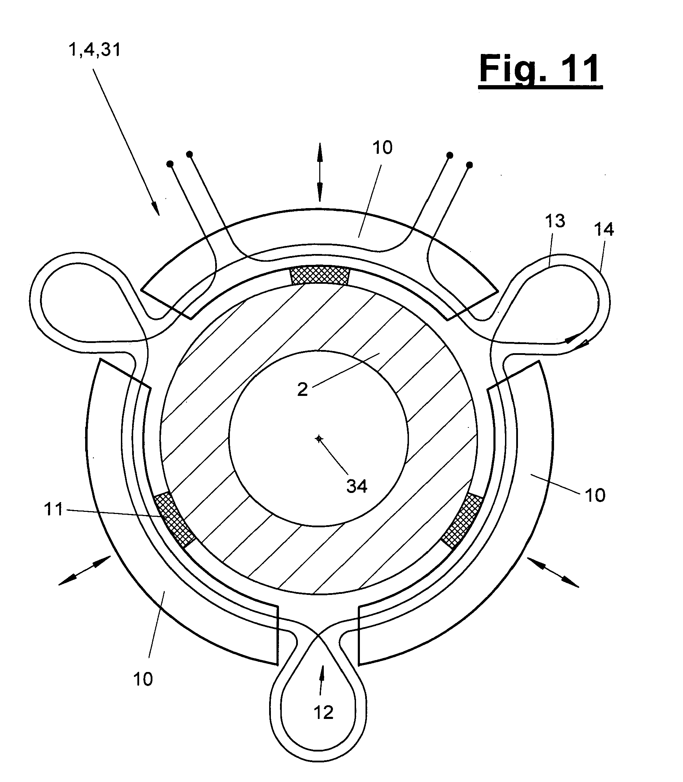

- Figur 10:: eine Draufsicht auf eine segmentierte magnetische Abschirmung,
- Figur 11:: eine im Durchmesser veränderliche Kombispule und
- Figur 12-14:: einen Träger mit mehreren unterschiedlich großen Spulenanordnungen nebst eines Schaltungsbeispiels von mehreren Spulen.

In den Zeichnungen ist eine Vorrichtung zum induktiven Erwärmen eines Gegenstands, insbesondere einer Werkzeugaufnahme (2) in verschiedenen Varianten dargestellt. Diese Vorrichtung kann Bestandteil eines Schrumpfgeräts (1) sein und besteht aus einem Träger (23) mit mindestens einer induktiven Spulenanordnung (4,5,6), welche jeweils mindestens eine elektrische Spule (7,8,9) und mindestens eine Energieversorgung (15,16) aufweist.

Die Werkzeugaufnahme (2) dient zum Aufnehmen und Festhalten von Werkzeugen (3), insbesondere Rotationswerkzeugen, wie Bohrer, Fräser, Reiben oder dergl.. Die Werkzeugaufnahme hat einen hülsenförmigen vorderen Bereich, in dessen Hohlraum das Werkzeug (3) mit einem Schaft eingeführt und im Schrumpf- oder Presssitz befestigt werden kann. Die Werkzeugaufnahme hat am anderen Ende ein geeignetes Anschlussteil zur Verbindung mit einer Werkzeugmaschine oder dergl.. Das Anschlussteil kann z.B. der übliche Norm- oder Steilkegel sein. Die Werkzeugaufnahme (2) besteht z.B. aus Stahl oder aus einem anderen geeigneten Material, welches elektrisch leitfähig und ggf. auch magnetisch leitend ist. Der Außendurchmesser des Werkzeugschafts ist etwas größer als der Innendurchmesser der Hülse. Das Hülsenteil kann in der besagten Vorrichtung durch induktive Erwärmung geweitet werden, so dass der Werkzeugschaft sich einstecken oder rausnehmen lässt. Beim Abkühlen schrumpft das Hülsenteil und bewirkt den Press- oder Schrumpfsitz. Die Abkühlung kann durch die Umgebungstemperatur oder auf beschleunigtem Wege durch eine Kühlvorrichtung (nicht dargestellt) erreicht werden. Außer Werkzeugaufnehmen (2) können auch beliebige andere Gegenstände aus elektrisch und ggf. auch magnetisch leitenden Werkstoffen induktiv erwärmt werden.

Der Träger (23) mit den ein oder mehreren Spulenanordnungen (4,5,6) kann über einen Halter (33) mit einem Führungselement, z.B. einer Führungsstange, des Schrumpfgerätes axial in Richtung der zentralen Längsache (34) der Werkzeugaufnahme (2) und des Werkzeugs (3) verstellbar sein. Für die Werkzeugaufnahme (2) kann eine entsprechende Halterung am Schrumpfgerät (1), z.B. ein Spannteller oder dergl. vorhanden sein.

Die Werkzeugaufnahme (2) mit ihrem Hülsenteil und der Schaft des Werkzeugs (3) sind vorzugsweise rotationssymmetrisch bzgl. der gemeinsamen Zentralachse (34) ausgebildet. Das Hülsenteil kann eine zylindrische oder kegelige Form haben. Die nachfolgend erläuterten Spulenanordnung(en) (4,5,6) sind ebenfalls konzentrisch zur Zentralachse (34) ausgebildet und angeordnet. Alternativ sind prismatische oder anderweitige Formgebungen möglich.

Die Erwärmung der Werkzeugaufnahme (2) erfolgt auf induktivem Wege über elektromagnetische Wechselfelder, welche in der Werkzeugaufnahme (2) Wirbelströme erzeugen. Die Wechselfelder können aus gepulstem Gleichstrom oder Wechselstrom erzeugt werden. Die Frequenzen sind variabel und liegen z.B. zwischen 5 - 150 kHz.

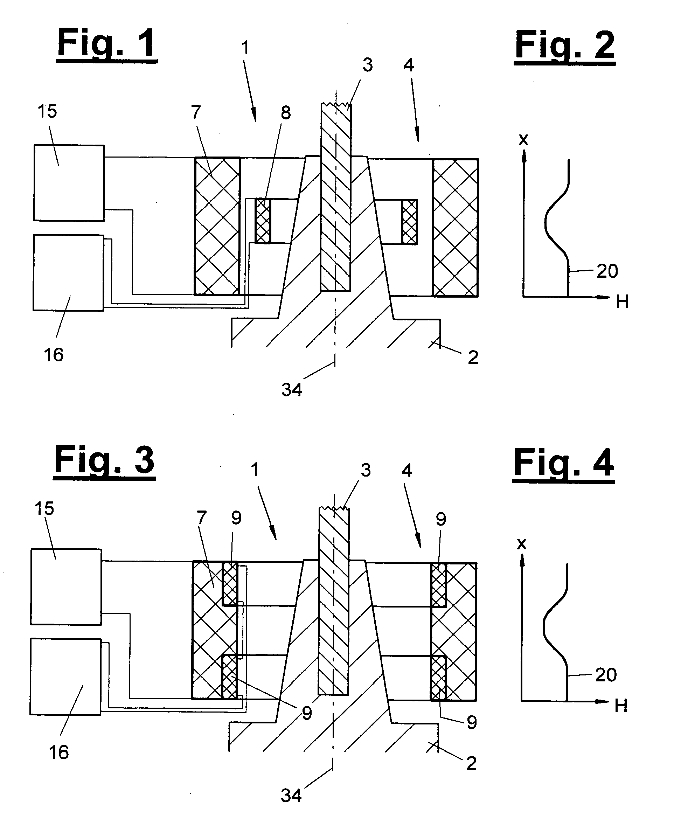

Figur 1 bis 8 zeigen vier verschiedene Varianten einer mehrteiligen Spulenanordnung (4).

In den beiden Varianten von Figur 1 bis 4 ist mindestens eine Hauptspule (7) vorhanden, die mit ein oder mehreren zusätzlichen und innerhalb der Hauptspule (7) angeordneten weiteren Spulen (8,9) zusammenwirkt. Die Hauptspule (7) erzeugt vorzugsweise ein stärkeres elektromagnetisches Feld als die zusätzlichen Spulen (8,9).

In der Variante von Figur 1 befindet sich im Zwischenraum zwischen der äußeren Hauptspule (7) und der Werkzeugaufnahme (2) eine einzelne Kompensationsspule (8), welche lokal ein dem Hauptfeld entgegengerichtetes Kompensationsfeld (18) erzeugt. Die Kompensationsspule (8) ist etwa in Axialrichtung im mittleren Bereich der Werkzeugaufnahme (2) angeordnet und schwächt in diesem Bereich das Hauptfeld. Figur 2 zeigt den zugehörigen örtlichen Verlauf der resultierenden Feldstärke (20) in einer schematischen Darstellung.

In der Variante von Figur 3 sind in der Hauptspule (7) integriert zwei Verstärkungsspulen (9) angeordnet und befinden sich jeweils an den axialen Endbereichen der Werkzeugaufnahme (2). Die integrierte Anordnung kann auch bei der Variante von Figur 1 Verwendung finden. Alternativ können bei Figur 3 die Verstärkungsspulen (9) im Innenraum der Hauptspule (7) angeordnet werden. Die Verstärkungsspulen (9) erzeugen lokal zwei gleich zum Hauptfeld gerichtete Verstärkungsfelder, welche an dem besagten Stirnbereichen zu einer örtlichen Verstärkung des resultierenden Feldes (20) führen. Figur 4 zeigt den zugehörigen örtlichen Verlauf der resultierenden Feldstärke (20) in einer schematischen Darstellung.

Die zusätzlichen Spulen (8,9) sind in ihrer Längenerstreckung kürzer als die Werkzeugaufnahme (2). Sie können ortsfest innerhalb der Hauptspule (7) angeordnet sein. Alternativ ist eine axiale und ggf. auch radiale Verstellung möglich. Hierdurch lassen sich die Kompensations- und Verstärkungsfelder individuell platzieren und ausrichten.

In der gezeigten Ausführungsform haben die Spulen (7,8,9) eine einfache Ringform und besitzen eine gleichmäßige Wicklung. Alternativ können die Spulen (7,8,9) eine an die Kontur des Hülsenteils der Werkzeugaufnahme (2) angepasste Form, insbesondere eine Kegelform, aufweisen. Ferner kann die Wicklung in Axialrichtung veränderbar sein und unterschiedliche Wicklungsdichten, Wicklungsdurchmesser etc. haben.

Die Spulen (7,8,9) können getrennte Energieversorgungen oder Stromquellen (15,16) aufweisen, welche den erforderlichen Spulenstrom mit der gewünschten Spannung, Frequenz und Stromstärke erzeugen. Die Stromquellen (15,16) sind steuerbar und können insbesondere durch Pulsweitenmodulation und/oder Pulsfrequenzmodulation die gewünschten gepulsten Ströme erzeugen. Die Hauptspule (7) und die zusätzlichen Spulen (8,9) werden von vorzugsweise unterschiedlichen Strömen durchflossen, die sich durch ihre Größe, Richtung oder auch ihre zeitliche Schaltung unterscheiden. Bei der Kompensationsspule (8) ist die Stromrichtung zur Erzeugung des Gegenfelds entgegengesetzt zur Hauptspule (7). Beide Spulen (7,8) sind an getrennte und getrennt steuerbare Stromquellen (15,16) angeschlossen. In der Variante von Figur 3 sind die beiden Verstärkungsspulen (9) in Reihe geschaltet und mit einer gemeinsamen Stromquelle (16) verbunden. Die Hauptspule (7) hat auch hier ihre eigene Stromquelle (15). Die Ströme in der Hauptspule (7) und in den Verstärkungsspulen (9) sind gleich gerichtet. Die erzeugten Haupt- und Verstärkungsfelder können gleich oder unterschiedlich groß sein.

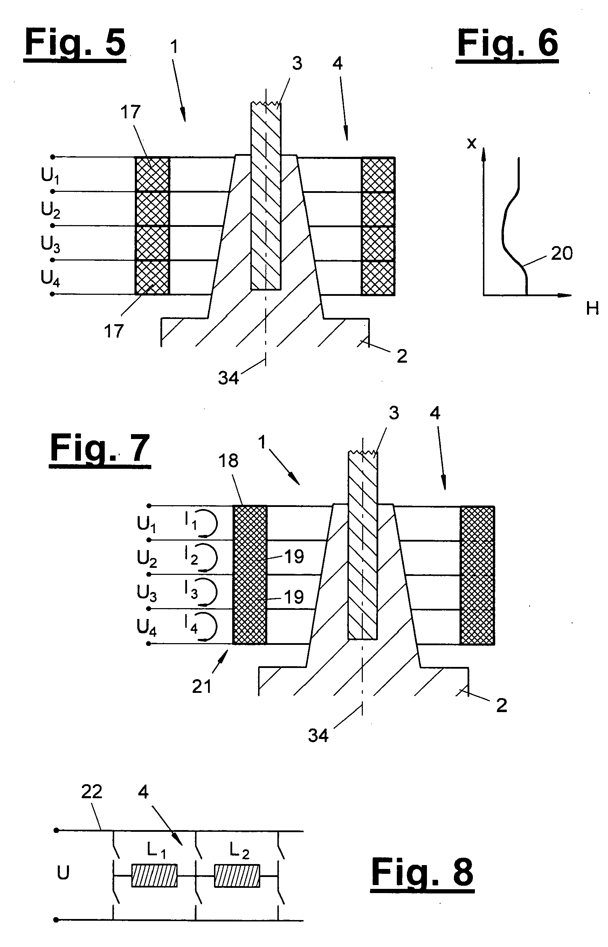

In der Variante von Figur 5 bis 7 sind andere Arten mehrteiliger Spulen (17,18) dargestellt. In der Ausführungsform von Figur 5 sind mehrere Spulen (17) in Axialrichtung (34) hintereinander angeordnet und werden getrennt mit Strom beaufschlagt und gesteuert. Die Spulen (17) können untereinander gleich oder unterschiedlich sein. Durch die getrennte Ansteuerbarkeit können in Axialrichtung lokal unterschiedliche Feldstärken erzeugt werden. Vorzugsweise sind drei oder mehr Spulen (17) axial hintereinander angeordnet. Durch die Einzelansteuerbarkeit der Spulen (17) können resultierende Felder bzw. Feldstärken (20) mit symmetrischer oder asymmetrischer Ausformung erzeugt werden. Figur 6 zeigt eine solche Asymmetrie mit einer Schwächung des resultierenden Feldes (20) im mittleren Bereich der Werkzeugaufnahme (2).

In der Variante von Figur 7 ist eine einzelne Spule (18) vorhanden, die durch mehrere Anzapfungen in mehrere Spulenabschnitte (19) unterteilt wird. Vorzugsweise sind drei oder mehr solcher Spulenabschnitte (19) in Axialrichtung vorhanden.

Die Spulen (17) oder Spulenabschnitte (19) können gemäß der Schaltungsbeispiele von Figur 7 und 8 über eine Reihenschaltung (21) mehrerer Spulen oder über eine mehrpulsige Brückenschaltung (22) beaufschlagt werden. Die Brückenschaltung (22) kann z.B. sechspulsig betrieben werden. Sie lässt sich insbesondere einsetzen, wenn die Spulen (17) oder Spulenabschnitte (19) eine gemeinsame Energieversorgung oder Stromquelle haben. Hierdurch können die Ströme zeitlich unterschiedlich geschaltet und ggf. auch in ihrer Richtung verändert werden.

Durch die Spulenanordnungen (4) von Figur 1 bis 7 lässt sich jeweils das im Wesentlichen gleiche resultierende Feld (20) gemäß Figur 2 und 4 erzeugen. Es ist im mittleren Bereich des Werkzeughalter (2) in einstellbarer Weise geschwächt, um im Werkzeughalter (2) eine über die Länge möglichst gleichmäßige Erwärmung zu erzeugen. Die notwendigen Einstellungen an den Stromquellen (15,16) oder den Schaltungen (21,22) können auf empirischen Wege oder durch Berechnung ermittelt werden. Hierdurch lässt sich die normalerweise bei kegeligen Werkzeugaufnahmen (2) auftretende übermäßige Erwärmung im mittleren Bereich vermeiden bzw. kompensieren.

Daneben sind auch andere Einflussmöglichkeiten gegeben. Bei Ringspulen in Verbindung mit einem kegelförmigen Hülsenteil der Werkzeugaufnahme (2) können Feldunterschiede durch formbedingte unterschiedliche Spulenabstände kompensiert werden. In der Variante von Figur 3 kann z.B. die dem schmäleren Kegelteil benachbarten Verstärkungsspule (9) mit einem entsprechend geschalteten Strom ein größeres Verstärkungsfeld (19) aufbauen als die andere Verstärkungsspule (9). Dies bedingt eine entsprechend geänderte Beschaltung in der Stromversorgung.

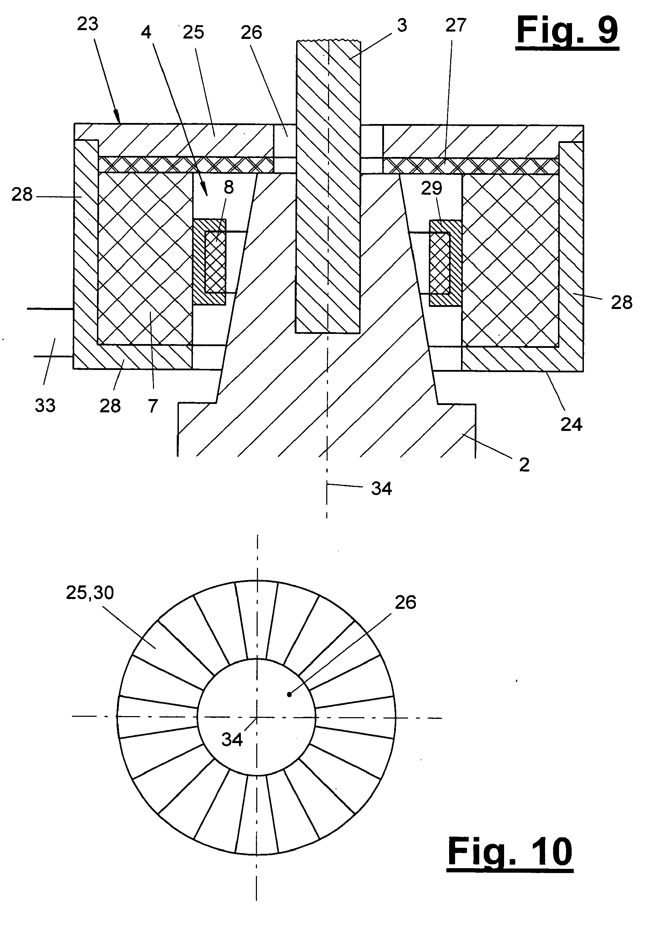

Figur 9 zeigt einen Längsschnitt durch einen Träger (23) mit einer Spulenanordnung (4) gemäß vorbeschriebenen Ausführungsbeispiel von Figur 1. Alternativ kann auch eine Spulenanordnung (4) gemäß der anderen Varianten von Figur 3, 5 und 7 Verwendung finden. In weiterer Abwandlung ist auch eine Spulenform nach dem Stand der Technik, insbesondere gemäß der DE 199 15 412 A1, DE 101 02 710 A1 oder der DE 101 57 432 A1 möglich. Dem nachfolgend beschriebenen Erfindungsaspekt kommt somit eigenständige Bedeutung zu.

Der Träger (23) weist in dieser Ausführungsform ein im wesentlichen zylindrisches Gehäuse (24) auf, welches an den Stirnende Durchlassöffnungen (26) für den Werkzeughalter (2) und das Werkzeug (3) aufweist. Das Gehäuse (24) hat am Umfang und an der zum Normkegel der Werkzeugaufnahme (2) weisenden Stirnseite eine Wandung (28) aus einem Material, welches magnetisch leitend und zugleich elektrisch isolierend oder nicht leitfähig ist. Dies kann z.B. Ferrit oder ein anderes geeignetes Material sein. Auch die innenliegende zusätzliche Spule (8,9) kann rückseitig von einer solchen Wandung oder Abschirmung (29) aus Ferrit umschlossen sein. Die Spulenkörper selbst können außerdem in geeigneten Halterungen aus Kunststoff oder dergl. aufgenommen sein.

An der zum Werkzeug (3) weisenden Stirnseite hat das Gehäuse (24) eine Stirnwand (25) aus einem Material, welches sowohl magnetisch, wie auch elektrisch leitfähig ist. Dies kann z.B. ein MU-Metall, ein Trafoblech oder ein Material mit dem Handelsnamen Ultraperm oder Vitroperm sein. Die Stirnwand (25) ist gegenüber den stromführenden Teilen elektrisch isoliert. Dies kann z.B. eine Isolationsschicht (27) zwischen den Spulen (7,8) und der Stirnwand (25) sein. Diese Isolation (27) kann außerdem an der Stirnseite des Werkzeughalters (2) aufliegen und für eine elektrisch isolierende Distanz zur Stirnwand (25) sorgen. An der Kontaktstelle der Stirnwand (25) mit der elektrisch nicht leitenden Wandung (28) ist ohnehin eine Isolierung gegeben.

Die Stirnwand (25) mit ihrer Durchlassöffnung (26) sorgt für eine magnetische Flusskonzentration an der benachbarten Stirnseite des Werkzeughalters (2) und mindert den magnetischen Streufluss außerhalb der Induktionsspulen (7,8,9). Durch die elektrische Leitfähigkeit können in der Stirnwand (25) ebenfalls Wirbelströme und eine damit einhergehende Erwärmung auftreten. Diese induktive Erwärmung kann über verschiedene Maßnahmen bei Bedarf verhindert oder unterdrückt werden. Figur 8 zeigt hierfür die Möglichkeit einer geschlitzten oder segmentierten Abschirmung (30) zur Verhinderung des Stromflusses. Zwischen den einzelnen Segmenten sind isolierende Schlitze oder Abstände vorhanden. In weiteren nicht dargestellten Varianten ist eine Wasserkühlung der Stirnwand (25) möglich. Ferner kann die Stirnwand (25) aus gestapelten Blechen in Form einer sogenannten Laminierung aufgebaut sein. Schließlich ist es möglich, die Erwärmung der Stirnwand (25) gezielt zur stirnseitigen Erwärmung des Werkzeughalters (2) zu verwenden, ohne zugleich das Werkzeug (3) in unerwünschter Weise aufzuheizen. Hierfür kann eine wärmeleitende und ggf. zugleich elektrisch isolierende Verbindung zwischen der Stirnwand (25) und dem Werkzeughalter (2) geschaffen werden, die bei Einführung des Werkzeughalters (2) in den Träger (23) automatisch durch Kontaktbildung geschlossen wird.

Figur 11 bis 13 zeigen Varianten für eine größenvariable Gestaltung der Spulenanordnung. In der Variante von Figur 11 ist eine einzelne und ihrer Größe verstellbare Spulenanordnung (4) in Form einer sogenannten Kombispule (31) dargestellt. Die Kombispule (31) lässt sich in ihrer Größe und insbesondere in ihrem Durchmesser verändern und an unterschiedliche Werkzeughalter (2) anpassen. Die Spulenanordnung (4) kann hierbei die gleiche wie in einem der vorbeschriebenen Ausführungsbeispiele, z.B. von Figur 1 oder 3 sein. Alternativ kann die Spulenanordnung die gleiche Ausbildung wie bei dem zu Figur 9 genannten Stand der Technik haben. Auch diese Ausführungsbeispiele von Figur 11 bis 14 haben insoweit eine eigenständige erfinderische Bedeutung.

Die Kombispule (31) besteht aus mehreren beweglichen Wicklungssegmenten (10). Die Beweglichkeit besteht vorzugsweise in Radialrichtung zur Achse (34). Zusätzlich kann auch in Axialrichtung eine Beweglichkeit vorhanden sein. Die gebogenen Wicklungssegmente (10) umschließen ringförmig den Werkzeughalter (2) mit einem einstellbaren Abstand. Für die Einstellungen können z.B. Abstandshalter (11) vorhanden sein. Diese können aus einem magnetisch leitenden und elektrisch isolierenden Material bestehen. Die Wicklungssegmente (10) haben über die Einstellbarkeit den optimalen radialen Abstand zur beaufschlagten Werkzeugaufnahme (2).

Die Wicklungssegmente (10) bestehen aus einem im wesentlichen formsteifen Trägermaterial, in dem die Wicklungsstränge der Spule integriert sind. Zwischen benachbarten Wicklungssegmenten (10) besteht in Umfangsrichtung jeweils ein Freiraum (12) in den sich die aus den Stirnseiten der Wicklungssegmente (10) austretenden Wicklungsstränge erstrecken. Die freiliegenden Wicklungsstränge haben hier eine gebogene Schleifenform. Hierbei bestehen zumindest eine Wicklungsschleife (13) und eine Kompensationsschleife (14), in denen die Ströme gegensinnig fließen. Die Wicklungsschleife (13) ist z.B. innerhalb der Kompensationsschleife (14) angeordnet und hat zur Stromrichtungsumkehr einander kreuzende Strangbereiche. Die Schleifen (13,14) können je nach Strangzahl auch mehrfach vorhanden sein.

In den Wicklungssegmenten (10) fließen die Ströme in den einzelnen Strangsegmenten gleichsinnig, wodurch ein homogenes elektromagnetisches Feld erzeugt wird. In den Schleifen (13,14) heben sich die Felder durch die gegensinnige Stromrichtung auf. Die nach außen ausgebauchten Schleifenbereiche sind somit im wesentlichen feldfrei.

Die elastischen Schleifen (13,14) folgen der Radialverstellung der Wicklungssegmente (10) und ändern entsprechend ihre Form und Ausbauchung. Die Segmentverstellung kann durch beliebig geeignete mechanische Führungen eingestellt werden. Die Verstellung kann von Hand oder mit einem geeigneten Antrieb vorgenommen werden, wobei die Wicklungssegmente (10) eigene Antriebe oder einen gemeinsamen Antrieb haben können. Die Verstellung kann außerdem synchronisiert sein.

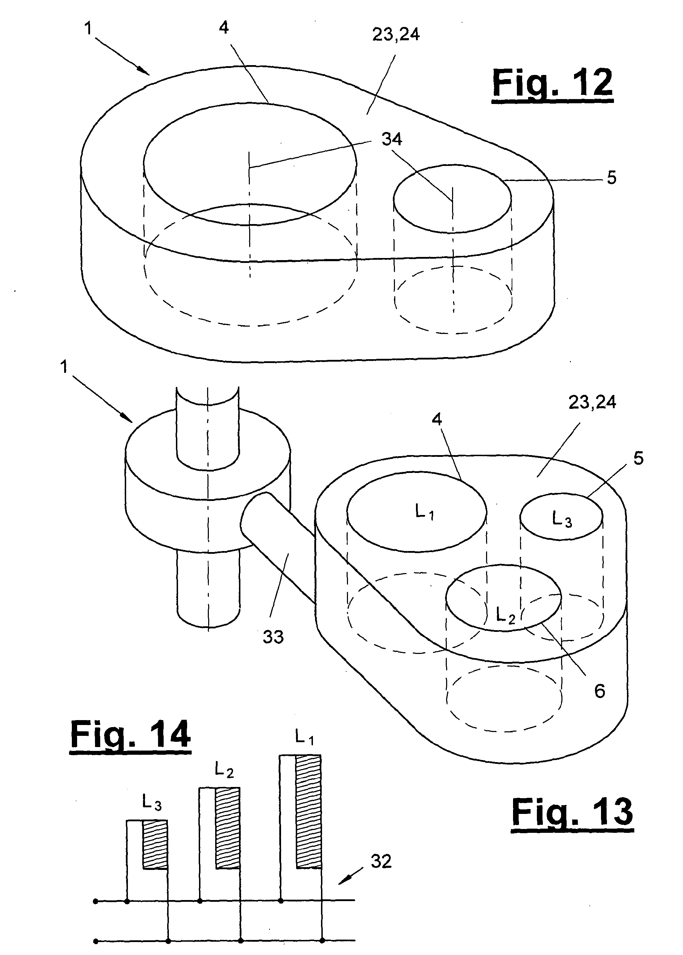

Figur 12 und 13 zeigen eine weitere Variante, bei welcher der einzelne Träger (23) mehrere unterschiedliche Spulenanordnungen (4,5,6) aufweist. Die Spulenanordnungen (4,5,6) haben insbesondere unterschiedliche Durchmesser und sind für unterschiedliche Werkzeugaufnahmen (2) vorgesehen und ausgelegt. Die Spulenanordnungen (4,5,6) können wiederum gemäß Figur 1 bis 7 oder nach dem Stand der Technik ausgebildet sein. Ggf. kann auch eine begrenzt radial verstellbare Ausgestaltung gemäß Figur 11 vorhanden sein. In der Variante von Figur 12 sind zwei Spulenanordnungen (4,5) und in der Ausführungsform von Figur 13 sind drei Spulenanordnungen (4,5,6) vorhanden. Figur 13 zeigt auch schematisch die Verbindung des Trägers (23) über den Halter (33) mit einer Führung des Schrumpfgerätes (1). Die elektrischen Anschlüsse und die Stromversorgungen sind nicht dargestellt.

Figur 14 verdeutlicht in einem Ausführungsbeispiel eine Parallelschaltung (32) der drei Spulenanordnungen (4,5,6) bzw. der Spulen L1, L2, L3 von Figur 13. Die drei Spulenanordnungen (4,5,6) sind parallel geschaltet und an eine gemeinsame Stromquelle bzw. Energieversorgung angeschlossen. Im Betrieb können alle Spulenanordnungen (4,5,6) beaufschlagt werden. Alternativ kann über einen Schalter oder einen Sensor nur die jeweils benötigte Spulenanordnung (4,5,6) mit der Stromversorgung verbunden werden.

In Abwandlung der gezeigten und beschriebenen Ausführungsbeispiele von Figur 12 bis 14 können die mehrfachen Spulenanordnungen (4,5,6) jeweils eine eigene Stromversorgung aufweisen. Dies ist günstig zur Minderung von Blindströmen. Die eigenständigen Stromversorgungen können parallel an das elektrische Netz angeschlossen sein.

Abwandlungen der gezeigten Ausführungsformen sind in verschiedener Weise möglich. Dies betrifft die konstruktive Einzelgestaltung und die Zuordnung der Spulenanordnungen (4,5,6) und des Trägers (23) sowie der anderen Komponenten der Erwärmungsvorrichtung bzw. des Schrumpfgeräts (1).

### BEZUGSZEICHENLISTE

- 1: induktive Erwärmungsvorrichtung, Schrumpfgerät
- 2: Werkzeugaufnahme
- 3: Werkzeug
- 4: Spulenanordnung
- 5: Spulenanordnung
- 6: Spulenanordnung
- 7: Spule, Hauptspule
- 8: Spule, Kompensationsspule, Gegenspule
- 9: Spule, Verstärkungsspule
- 10: beweglicher Wicklungsbereich
- 11: Abstandshalter
- 12: Freiraum
- 13: Wicklungsschleife
- 14: Kompensationsschleife
- 15: Stromquelle, Energieversorgung
- 16: Stromquelle, Energieversorgung
- 17: Spule
- 18: Spule
- 19: Spulenabschnitt
- 20: Feld, resultierendes Feld
- 21: Reihenschaltung
- 22: Brückenschaltung
- 23: Träger
- 24: Gehäuse
- 25: Stirnwand, magnetische Abschirmung
- 26: Durchlass
- 27: Isolierung
- 28: Wandung, magnetische Abschirmung
- 29: magnetische Abschirmung
- 30: segmentierte Abschirmung
- 31: Spule, Kombispule
- 32: Parallelschaltung
- 33: Halter
- 34: Achse, Längsachse

## Patentansprüche

1. Vorrichtung zum induktiven Erwärmen von Gegenständen, insbesondere Werkzeugaufnahmen (2), bestehend aus einem Träger (23) mit mindestens einer induktiven Spulenanordnung (4,5,6) mit jeweils mindestens einer Spule (7,8,9) und mindestens einer Energieversorgung (15,16), wobei die Spulenanordnung (4,5,6) ein über die Längsachse (32) veränderliches elektromagnetisches Feld erzeugt, **dadurch gekennzeichnet, dass** die Spulenanordnung (4,5,6) mehrere radial ineinander und/oder axial hintereinander angeordnete und getrennt steuerbare Spulen (7,8,9,17) oder Spulenabschnitte (19) aufweist.

2. Vorrichtung nach Anspruch 1, **dadurch gekennzeichnet, dass** die Spulenanordnung (4,5,6) radial außenseitig mindestens eine Hauptspule (7) zur Erzeugung eines Hauptfelds und innenseitig mindestens eine im axial mittleren Bereich befindliche Kompensationsspule (8) zur Erzeugung eines lokalen, entgegen gerichteten Kompensationsfelds aufweist.

3. Vorrichtung nach Anspruch 1, **dadurch gekennzeichnet, dass** die Spulenanordnung (4,5,6) radial außenseitig mindestens eine Hauptspule (7) zur Erzeugung eines Hauptfelds und innenseitig mindestens zwei an den axialen Endbereichen befindliche Verstärkungsspulen (9) zur Erzeugung zweier lokaler, gleich gerichteter Verstärkungsfelder aufweist.

4. Vorrichtung nach Anspruch 1, **dadurch gekennzeichnet, dass** die Spulenanordnung (4,5,6) mehrere axial hintereinander angeordnete Spulen (17) aufweist, die unterschiedlich starke Felder erzeugen.

5. Vorrichtung nach Anspruch 1, **dadurch gekennzeichnet, dass** die Spulenanordnung (4,5,6) mindestens eine Spule (18) mit mehreren Spulenabschnitten (19) aufweist, die unterschiedlich starke Felder erzeugen.

6. Vorrichtung nach einem der vorhergehenden Ansprüche, **dadurch gekennzeichnet, dass** das aus der Überlagerung der Felder resultierende Feld (20) im mittleren Bereich eine Schwächung aufweist.

7. Vorrichtung nach einem der vorhergehenden Ansprüche, **dadurch gekennzeichnet, dass** die Spulen (7,8,9,17) getrennte Energieversorgungen (15,16) aufweisen.

8. Vorrichtung nach einem der vorhergehenden Ansprüche, **dadurch gekennzeichnet, dass** die Spulenabschnitte (19) getrennte Anzapfungen aufweisen.

9. Vorrichtung nach einem der vorhergehenden Ansprüche, **dadurch gekennzeichnet, dass** die Energieversorgungen (15,16) getrennt steuerbar sind.

10. Vorrichtung nach einem der Ansprüche 1 bis 6, **dadurch gekennzeichnet, dass** die Spulen (17) oder Spulenabschnitte (19) eine gemeinsame Energieversorgungen (15,16) aufweisen und über eine Schaltung (22) getrennt angesteuert werden.

11. Vorrichtung nach Anspruch 10, **dadurch gekennzeichnet, dass** die Schaltung (22) als mehrpulsige, insbesondere 6-pulsige Brückenschaltung ausgebildet ist.

12. Vorrichtung zum induktiven Erwärmen von Gegenständen, insbesondere Werkzeugaufnahmen (2), insbesondere nach einem der vorhergehenden Ansprüche, mit einem Träger (23), der ein Gehäuse (24) für die Aufnahme mindestens einer Spulenanordnung (4,5,6) aufweist mit einer Gehäusewandung (28), die zumindest bereichsweise aus einem magnetisch leitenden und elektrisch isolierenden Material besteht, **dadurch gekennzeichnet, dass** das Gehäuse (24) zumindest eine Stirnwand (25) aus einem magnetisch und elektrisch leitenden Material aufweist, wobei die Stirnwand (25) gegenüber der Spulenanordnung (4,5,6) elektrisch isoliert (27) ist.

13. Vorrichtung nach Anspruch 12, **dadurch gekennzeichnet, dass** die Stirnwand (25) als segmentierte oder geschlitzte Abschirmung (30) ausgebildet ist.

14. Vorrichtung nach Anspruch 12 oder 13, **dadurch gekennzeichnet, dass** die Stirnwand (25) mit der Werkzeugaufnahme (2) und oder dem Werkzeug (3) wärmeleitend verbindbar ist.

15. Vorrichtung zum induktiven Erwärmen von Gegenständen, insbesondere Werkzeugaufnahmen (2), insbesondere nach einem der vorhergehenden Ansprüche, mit einem Träger (23) für die Aufnahme mindestens einer Spulenanordnung (4,5,6), **dadurch gekennzeichnet, dass** der Träger (23) mehrere unterschiedliche Spulenanordnungen (4,5,6) aufweist.

16. Vorrichtung nach Anspruch 15, **dadurch gekennzeichnet, dass** die Spulenanordnungen (4,5,6) unterschiedliche Größen, insbesondere unterschiedliche Durchmesser aufweisen.

17. Vorrichtung nach Anspruch 15 oder 16, **dadurch gekennzeichnet, dass** die unterschiedlichen Spulenanordnungen (4,5,6) parallel an eine gemeinsame Energieversorgung geschaltet sind.

18. Vorrichtung nach Anspruch 15 oder 16, **dadurch gekennzeichnet, dass** die unterschiedlichen Spulenanordnungen (4,5,6) eigene getrennte Energieversorgungen aufweisen.

19. Vorrichtung zum induktiven Erwärmen von Gegenständen, insbesondere Werkzeugaufnahmen (2), insbesondere nach einem der vorhergehenden Ansprüche, mit einem Träger (23) für die Aufnahme mindestens einer Spulenanordnung (4,5,6), **dadurch gekennzeichnet, dass** die Spulenanordnung (4,5,6) mindestens eine Spule (31) mit veränderlicher Größe, insbesondere mit veränderlichem Durchmesser aufweist.

20. Vorrichtung nach Anspruch 19, **dadurch gekennzeichnet, dass** die Spule (31) mehrere bewegliche, insbesondere radial bewegliche Wicklungssegmente (10) aufweist.

21. Vorrichtung nach Anspruch 19 oder 20, **dadurch gekennzeichnet, dass** zwischen benachbarten Wicklungssegmenten (10) umfangseitig Freiräume (12) mit freigelegten Wicklungssträngen angeordnet sind.

22. Vorrichtung nach Anspruch 19, 20 oder 21, **dadurch gekennzeichnet, dass** die Wicklungsstränge in den Freiräumen (12) eine gebogene Schleifenform aufweisen.

23. Vorrichtung nach einem der Ansprüche 19 bis 22, **dadurch gekennzeichnet, dass** die Wicklungsstränge eine Wicklungsschleife (13) und eine Kompensationsschleife (14) aufweisen, in den der Strom gegensinnig fließt.

24. Verfahren zum induktiven Erwärmen von Gegenständen, insbesondere Werkzeugaufnahmen (2), mittels einer Erwärmungsvorrichtung, die einen Träger (23) mit mindestens einer induktiven Spulenanordnung (4,5,6) mit jeweils mindestens einer Spule (7,8,9) und mindestens einer Energieversorgung (15,16) aufweist, wobei die Spulenanordnung (4,5,6) ein über die Längsachse (32) veränderliches elektromagnetisches Feld erzeugt, **dadurch gekennzeichnet, dass** das elektromagnetische Feld mittels einer getrennten Ansteuerung von mehreren radial ineinander und/oder axial hintereinander angeordneten und getrennt steuerbare Spulen (7,8,9,17) oder Spulenabschnitte (19) der Spulenanordnung (4,5,6) verändert wird.
